# EUROPÄISCHE PATENTANMELDUNG

(11) **EP 3 258 122 A1**
(43) Veröffentlichungstag der Anmeldung: **20.12.2017**
(21) Anmeldenummer: 16174784.5
(22) Anmeldetag: 16.06.2016
(51) Int. Cl.: F16B 13/14

(54) **EINZELPORTIONEN-SCHEIBENINJEKTOR MIT MIKROVERKAPSELTEM RADIKALISCHEM HÄRTUNGSMITTEL**

(71) Anmelder: HILTI Aktiengesellschaft, 9494 Schaan (LI)
(72) Erfinder: Bürgel, Thomas, 86899 Landsberg (DE)
(74) Vertreter: Hilti Aktiengesellschaft Corporate Intellectual Property

(57) **Zusammenfassung**

Die Erfindung betrifft einen Injektor (3) zum Verfüllen eines um einen Ankerbolzen (10) gebildeten Ringraums, mit einer Kolbenscheibe (31), welche eine Durchgangsöffnung (41) für den Ankerbolzen aufweist, und einer der Kolbenscheibe vorgelagerten Menge (30) einer Füllmasse, wobei die Kolbenscheibe einen Kolben zum Verdrängen zumindest eines Teils der Menge der Füllmasse in den Ringraum (97) bildet, wobei die Füllmasse eine Harzkomponente, die als härtbaren Bestandteil mindestens ein radikalisch härtbares Harz enthält, und eine in Form von Mikrokapseln vorliegende Härterkomponente, die mindestens ein Härtungsmittel für das radikalisch härtbare Harz der Harzkomponente enthält, aufweist.

## Beschreibung

Die Erfindung betrifft einen Injektor zum Verfüllen eines um einen Ankerbolzen gebildeten Ringraums, eine Befestigungsanordnung mit einem solchen Injektor, ein Gebinde mit einem solchen Injektor und ein Verfahren zum Installieren eines Ankers unter Verwendung eines solchen Injektors.

Es ist bekannt, den Ringraum, der um den Ankerbolzen eines in einem Loch verankerten mechanischen Ankers, insbesondere Spreizankers, gebildet ist, mit einer Füllmasse zu verfüllen, welche im Ringraum aushärtet. Hierdurch kann der Anker in radialer Richtung im Loch und auch im Anbauteil abgestützt werden, was die Lastwerte verbessern kann. Nach einer in der DE 10204591 A1 gelehrten Variante erfolgt das Verfüllen des Ringraums von der Mitte des Lochs her, nämlich durch einen im Ankerbolzen gebildeten Füllkanal. Insbesondere wird die Düse eines Injektionsgeräts dichtend am Füllkanal angesetzt und Füllmasse in den Füllkanal eingefüllt. Die eingefüllte Füllmasse tritt durch ein Querloch im Bolzen aus. Nach einer in der DE 10111470 A1 gelehrten alternativen Vorgehensweise erfolgt das Verfüllen des Ringraums über eine Unterlegscheibe mit einer Durchgangsöffnung, an der ein Injektionsgerät angesetzt wird.

In der europäischen Patentanmeldung mit dem Anmeldeaktenzeichen 16150747.0 ist ein Einzelportionen-Scheibeninjektor zum Verfüllen des um einen Ankerbolzen gebildeten Ringraums beschrieben. Dieser Einzelportionen-Scheibeninjektor weist eine Kolbenscheibe mit einer Durchgangsöffnung für den Ankerbolzen sowie eine der Kolbenscheibe vorgelagerte Menge einer Füllmasse auf, wobei die Kolbenscheibe einen Kolben zum Verdrängen zumindest eines Teils der Menge der Füllmasse in den Ringraum bildet. Der Injektor wird ähnlich wie eine Unterlegscheibe um den Ankerbolzen herum angeordnet. Beim Setzen des Ankers wird die Kolbenscheibe an den Untergrund angepresst und hierbei zumindest ein Teil der Menge der Füllmasse in den Ringraum um den Ankerbolzen herum eingepresst. Hierdurch kann die Füllmasse besonders einfach, schnell, günstig und zuverlässig eingebracht werden. Da pro Anker jeweils ein eigener Injektor vorgesehen ist, welcher jeweils Füllmasse für ein einziges Loch mitbringt, und da die Injektoren jeweils eine unterlegscheibenähnliche Kolbenscheibe aufweisen, kann ein solcher Injektor auch als Einzelportionen-Scheibeninjektor bezeichnet werden.

Die EP 2597322 A2 betrifft ein Gewindeteil, insbesondere eine Schraube oder Mutter. Zur Schraubensicherung ist das Gewinde des Gewindeteils mit einem Überzug versehen, in dem sich Mikrokapseln befinden, wobei zumindest ein Teil der Mikrokapseln einen polymerisierbaren Klebstoff enthält. Für die Erzeugung der Klebewirkung kann insbesondere ein ungesättigtes Methacrylat als Klebstoff zum Einsatz kommen. Als Härter wird in diesem Fall ein Radikalbildner, insbesondere ein Peroxid verwendet, welcher die radikalische Polymerisation des Methacrylats in Gang setzt.

Aufgabe der Erfindung ist es, einen besonders einfach und schnell zu bedienenden und zugleich günstigen und zuverlässigen Injektor zum Verfüllen eines um einen Ankerbolzen gebildeten Ringraums anzugeben, wobei der Injektor insbesondere eine besonders gute Lagerstabilität aufweist und eine besonders hohe Leistungsfähigkeit des gesetzten Ankers ermöglicht, und ferner eine Befestigungsanordnung mit einem solchen Injektor, ein Gebinde mit einem solchen Injektor und ein Verfahren zum Installieren eines Ankers unter Verwendung eines solchen Injektors anzugeben.

Die Aufgabe wird erfindungsgemäss durch einen Injektor mit den Merkmalen des Anspruchs 1, eine Befestigungsanordnung mit einem solchen Injektor mit den Merkmalen des Anspruchs 7, ein Gebinde mit einem solchen Injektor mit den Merkmalen des Anspruchs 8 und ein Verfahren zum Installieren eines Ankers unter Verwendung eines solchen Injektors mit den Merkmalen des Anspruchs 9 gelöst. Die weiteren, abhängigen Ansprüche geben bevorzugte Ausführungsformen an.

Entsprechend Anspruch 1 ist ein Injektor zum Verfüllen eines um einen Ankerbolzen gebildeten Ringraums vorgesehen, mit einer Kolbenscheibe, welche eine Durchgangsöffnung für den Ankerbolzen aufweist, und einer der Kolbenscheibe vorgelagerten Menge einer, insbesondere aushärtbaren, Füllmasse, wobei die Kolbenscheibe einen Kolben zum Verdrängen zumindest eines Teils der Menge der Füllmasse in den Ringraum bildet, wobei die Füllmasse eine Harzkomponente, die als härtbaren Bestandteil mindestens ein radikalisch härtbares Harz enthält, und eine in Form von Mikrokapseln vorliegende Härterkomponente, die mindestens ein Härtungsmittel für das radikalisch härtbare Harz der Harzkomponente enthält, aufweist.

Die Erfindung hat erkannt, dass bei einem Einzelportionen-Scheibeninjektor im Vergleich zu andersartigen Injektoren besondere Randbedingungen gegeben sein können. So ist bei einem Einzelportionen-Scheibeninjektor zum einen aufgrund der regelmässig relativ geringen Gesamtgrösse des Injektors auch der Aufnahmeraum für die Füllmasse häufig vergleichsweise klein. Zum anderen ist die Mischwirkung des Injektors auf die Füllmasse häufig vergleichsweise gering, da vergleichsweise kurze Strömungswege gegeben sind, die häufig keine vielstufigen Mischeranordnungen erlauben. Die Erfindung hat weiterhin erkannt, dass diese besonderen Randbedingungen die Leistungsfähigkeit konventioneller Formulierungen und Anordnungen der Füllmasse unter Umständen begrenzen können. Wird beispielsweise im Hinblick auf den kleinen Aufnahmeraum des Injektors ein ZweikomponentenEpoxidklebstoff mit schichtförmig angeordneten Komponenten verwendet, so wird es häufig erforderlich sein, eine Schichtfolge mit vergleichsweise dünnen Schichten zu wählen. Denn in der Regel kann vor dem Hintergrund der relativ geringen Mischwirkung, wie sie Einzelportionen-Scheibeninjektoren typischerweise aufweisen, nur mit vergleichsweise dünnen Schichten eine brauchbare Vermischung und somit ein für die Leistungsfähigkeit des gesetzten Ankers brauchbares Aushärteverhalten des Epoxidklebstoffs erhalten werden. Mit einer solchen Verringerung der Schichtdicke geht allerdings anderseits häufig eine unerwünschte Abnahme der Lagerstabilität einher. Denn geringe Schichtdicken beinhalten in der Regel entsprechend grosse Kontaktoberflächen mit der jeweils anderen Komponente, aber auch mit der Umwelt. Aufgrund der geringen Stabilität ist eine geschichtete Anordnung der Komponenten insbesondere bei radikalisch härtenden Klebstoffen häufig kaum möglich. Denn bei üblichen radikalisch härtenden Klebstoffen bilden sich häufig bereits bei niedrigen Temperaturen so viele Radikale in der Härterkomponente, dass es aufgrund der räumlichen Nähe zur Harzkomponente, die bei einer geschichteten Anordnung zwangsläufig gegeben ist, zur vorzeitigen Vernetzung der Harzkomponente kommen würde.

Hier setzt die Erfindung an und sieht eine Zusammensetzung und Anordnung der Füllmasse vor, welche im Hinblick auf die Randbedingungen, die ein Einzelportionen-Scheibeninjektor aufstellt, besonders gut geeignet ist. Insbesondere sieht die Erfindung bei einem Einzelportionen-Scheibeninjektor die Verwendung einer radikalisch härtenden Harzkomponente vor, in welche eine mikroverkapselte Härterkomponente eingebracht ist. Mittels der Mikroverkapselung kann ein vorzeitiger Kontakt der Radikale aus der Härterkomponente mit dem Harz mit entsprechenden nachteiligen Auswirkungen auf die Lagerstabilität besonders einfach und wirksam vermieden werden. Da andererseits bei radikalisch härtenden Harzen die Stöchiometrie häufig eine vergleichsweise geringe Rolle spielt, insbesondere verglichen mit Epoxidoder PUR-Klebstoffen, sind hier regelmässig auch die vergleichsweise einfachen Mischeranordnungen von Einzelportionen-Scheibeninjektoren ausreichend, um ein gutes Aushärteverhalten zu erzielen. Es werden also durch die Erfindung aushärtbare Füllmassen zur Verfügung gestellt, die einerseits für die regelmässig vergleichsweise einfach ausgeführten Mischeranordnungen von Einzelportionen-Scheibeninjektoren besonders gut geeignet sind und hier ein besonders gutes Aushärteverhalten ermöglichen. Zugleich sind die Füllmassen besonders lagerungsstabil, und zwar trotz des Umstandes, dass die vergleichsweise kompakten Bauformen von Einzelportionen-Scheibeninjektoren häufig mit einem besonders engen Kontakt der Komponenten der Füllmassen einhergehen.

Die Füllmasse bildet eine fliessfähige, aushärtbare Masse, welche fliessend aus dem Injektor in den Ringraum um den Anker herum verdrängt werden kann und im Ringraum aushärtet. Erfindungsgemäss ist die Härterkomponente mikroverkapselt, das heisst sie liegt in Form von Mikrokapseln vor. Hierunter kann in fachüblicher Weise vorzugsweise verstanden werden, dass die Härterkomponente in kleinsten Portionen vorliegt, in denen sie mittels zumindest eines Hüllmaterials immobilisiert ist. Insbesondere kann eine Kern-Hülle-Verkapselung vorgesehen sein, bei der die Härterkomponente vom Hüllmaterial umhüllt ist, so dass Kapseln mit jeweils zumindest einer Hülle gegeben sind. Die die Härterkomponente enthaltenden Mikrokapseln sind in der Füllmasse in der Harzkomponente eingebettet, das heisst die Harzkomponente bildet eine Matrix, welche die mikroverkapselte Härterkomponente verteilt enthält. Insbesondere werden die die Harzkomponente und die Härterkomponente der Füllmasse durch das Hüllmaterial der Mikrokapseln voneinander getrennt, so dass während der Lagerung und vor dem Verdrängen der Füllmasse aus dem Injektor in den Ringraum keine Umsetzung der Härterkomponente mit der Harzkomponente erfolgt. Während des Verdrängens der Füllmasse aus dem Injektor in den Ringraum werden die Mikrokapseln geöffnet, so dass das Härtungsmittel fortan auf das Harz wirken kann. Hierdurch wird die Aushärtung des Harzes gestartet. Die mechanisch öffnenden Mikrokapseln sollten vorzugsweise nicht zu klein sein, da dies gewährleisten kann, dass die Kapseln schon vor dem Eintritt in den Ringraum geöffnet werden, so dass ein besonders wirkungsvoller Aushärtungsprozess gegeben ist. Insbesondere ist das Harz mittels des Härtungsmittels polymerisierbar, was das Aushärten der Füllmasse bewirkt.

Die Harzkomponente kann zusätzlich zum Harz auch noch weitere Bestandteile aufweisen, beispielsweise einen Beschleuniger oder einen Füllstoff. Auch die Härterkomponente kann zusätzlich zum Härtungsmittel noch weitere Bestandteile aufweisen, beispielsweise einen anorganischen Füllstoff.

Bei Verwendung eines erfindungsgemässen Injektors kann die Füllmasse im Rahmen der Installation des Ankers automatisch in den Ringraum um den Ankerbolzen herum ausgepresst werden: Der erfindungsgemässe Injektor wird einfach auf den Anker aufgesteckt und die Ankermutter wird wie üblich angezogen und dann ist das System fertig. Es wird somit insbesondere kein zusätzlicher Arbeitsgang und kein weiteres Werkzeug wie zum Beispiel eine separate Injektionseinrichtung, die aufwändig angeschlossen werden müsste, benötigt. Somit ist ein besonders einfacher, schneller, sicherer, zuverlässiger und auch kostengünstiger Befüllvorgang gegeben. Da erfindungsgemäss keine Zuleitung benötigt wird, kann auch die Abfallmenge besonders klein gehalten werden.

Die erfindungsgemässe Kolbenscheibe bildet einen Kolben zum Verdrängen zumindest eines Teils der Menge der Füllmasse aus dem Injektor in den Ringraum und zum Einpressen zumindest eines Teils der Menge der Füllmasse aus dem Injektor in den Ringraum. Ein solcher Ringraum verbleibt regelmässig im Substrat und auch im Anbauteil um den Ankerbolzen herum, da der Ankerbolzen regelmässig durchmesserkleiner als das Loch im Anbauteil und im Substrat ist, um ein zuverlässiges Einführen des Ankerbolzens in das Loch zu gewährleisten.

Bei einem erfindungsgemässen Injektor ist Füllmasse durch axiales Anpressen der Kolbenscheibe an eine Oberfläche aus dem Injektor auspressbar, insbesondere durch axiales Anpressen der Kolbenscheibe an die Oberfläche des Anbauteils, aber auch an die Oberfläche des Substrats, wobei diese beiden Oberflächen das Loch, in welches der Ankerbolzen eingeführt wird, ringartig umgeben. Erfindungsgemäss ist zwischen der Kolbenscheibe einerseits und dem Substrat und/oder dem Anbauteil andererseits ein Kolbenraum gegeben, welcher durch Annähern der Kolbenscheibe an das Substrat und/oder an das Anbauteil unter Auspressen von Füllmasse volumenverkleinert wird. Beim Betrieb des Injektors wird die Kolbenscheibe axial an das Substrat und/oder an das Anbauteil angenähert, das heisst die Kolbenscheibe wird insbesondere zumindest annähernd parallel zur Durchgangsöffnung in der Kolbenscheibe und/oder insbesondere zumindest annähernd parallel zur Längsachse des Ankerbolzens bewegt.

Soweit hier von radial, axial und/oder der Umfangsrichtung die Rede ist, kann sich dies insbesondere auf die Längsachse des Ankerbolzens und/oder die Längsachse des Injektors beziehen, wobei letztere insbesondere durch die Durchgangsöffnung in der Kolbenscheibe definiert sein kann.

Je nach Ausgestaltung des Injektors wird häufig ein mehr oder weniger grosses Restvolumen der Menge der Füllmasse im Injektor zurückbleiben, das heisst die Kolbenscheibe wird in der Regel nur einen Teil, wenn auch häufig einen grossen Teil, der Menge der Füllmasse in den Ringraum verdrängen.

Der Anker, an dessen Ankerbolzen der erfindungsgemässe Injektor angeordnet wird, kann vorzugsweise ein Spreizanker sein, insbesondere ein Spreizanker des Bolzentyps. Ein Spreizanker kann insbesondere ein Keilgetriebe aufweisen, welches eine Zugbewegung des Ankerbolzens relativ zum Substrat in eine radiale Bewegung eines am Ankerbolzen angeordneten Spreizelements, insbesondere einer am Ankerbolzen angeordneten Spreizhülse, relativ zum Ankerbolzen umwandelt und den Anker so am Substrat verankert. Der Anker könnte grundsätzlich auch ein chemischer Anker sein, der mittels einer weiteren Füllmasse im Substrat verankert wird, wobei diese weitere Füllmasse chemisch gleich oder verschieden zur Füllmasse des Injektors sein kann.

Die Kolbenscheibe kann vorzugsweise aus einem Metallmaterial bestehen. Sie kann zum Beispiel in einem Stanzprozess gefertigt werden, was im Hinblick auf die Kosten vorteilhaft sein kann.

Besonders bevorzugt ist es, dass das radikalisch härtbare Harz ein (Meth)acrylatharz ist.

Als radikalisch härtbares Harz sind erfindungsgemäß ethylenisch ungesättigte Verbindungen, Verbindungen mit Kohlenstoff-Kohlenstoff-Dreifachbindungen und Thiol-Yne/Ene-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-AlderReaktion mit Cyclopentadien erhalten, oder sie werden alternativ durch eine erste Reaktion eines Diacids, z.B. Maleinsäure, mit Dicyclopentadien, und anschließend durch eine zweite Reaktion, der gewöhnlichen Herstellung eines ungesättigten Polyesterharzes erhalten, wobei man bei letzterem von einem DCPD-Maleatharz spricht.

Im Sinne der Erfindung sind Vinylesterharze Oligomere oder Polymere mit mindestens einer (Meth)acrylat-Endgruppe, so genannte (Meth)acrylat-funktionalisierte Harze (hierin auch als (Meth)acrylatharz bezeichnet), wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol Adigylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

In diesem Zusammenhang wird auf die Anmeldung US2011071234 verwiesen, deren Inhalt hiermit in diese Anmeldung aufgenommen wird.

Das Härtungsmittel ist zweckmässigerweise bei 20°C, also bei Raumtemperatur, flüssig. Das Härtungsmittel kann insbesondere ein Radikalbildner, vorzugsweise ein Peroxid, sein.

Alle dem Fachmann bekannten Peroxide, die zum Härten von radikalisch härtbaren Harzen verwendet werden, können eingesetzt werden. Derartige Peroxide umfassen organische und anorganische Peroxide. Beispiele geeigneter Peroxide sind Peroxycarbonate (der Formel-OC(O)O-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214-A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester, Benzoylperoxid, Peracetate und Perbenzoate, Laurylperoxid, einschließlich (Di)peroxyesters, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden ist. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) verwendet.

Besonders bevorzugt ist es, dass die Menge der Füllmasse in einem Reservoir angeordnet ist. Hiermit kann die Füllmasse in besonders einfacher und zuverlässiger Weise vor Umwelteinflüssen geschützt werden, und die Herstellung des Injektors kann weiter vereinfacht werden. Das Reservoir kann beispielsweise ein Folienbeutel sein. Das Reservoir kann insbesondere eine mit der Durchgangsöffnung der Kolbenscheibe fluchtende Durchgangsöffnung aufweisen, um ein Durchführen des Ankerbolzens durch den Injektor ohne Beeinträchtigung der Füllmasse zu gewährleisten. Insbesondere wenn die Füllmasse eine sehr hohe Viskosität aufweist, so dass die Füllmasse alleine aufgrund ihrer Viskosität hinreichend formstabil ist, oder wenn der Injektor die Menge der Füllmasse vollständig umschliesst, kann das Reservoir auch entfallen.

Eine weitere bevorzugte Ausgestaltung der Erfindung liegt darin, dass der Injektor eine Dichtungsscheibe aufweist, wobei die Menge der Füllmasse zumindest teilweise, insbesondere vollständig, zwischen, insbesondere axial zwischen, der Kolbenscheibe und der Dichtungsscheibe angeordnet ist. Eine solche Dichtungsscheibe kann den Fluss der Füllmasse beim Auspressen des Injektors kanalisieren und somit in besonders einfacher Weise dafür sorgen, dass die Füllmasse besonders zuverlässig in den Ringraum hineingepresst wird und insbesondere nicht einfach radial weggedrückt wird. Darüber hinaus kann bei Verwendung einer Dichtungsscheibe die Menge der Füllmasse in besonders einfacher Weise positioniert werden, da die Menge der Füllmasse zwischen der Kolbenscheibe und der Dichtungsscheibe eingehaust werden kann. Vorzugsweise kann die Menge der Füllmasse, insbesondere das Reservoir, mit der Dichtungsscheibe verbunden sein, was herstellungstechnisch vorteilhaft sein kann und die Positionierung der Menge der Füllmasse weiter erleichtern kann. Die Dichtungsscheibe kann auch Mischkanäle bilden, was die Durchmischung der Füllmasse noch weiter verbessern kann. Es kann vorgesehen sein, dass die Dichtungsscheibe während des Auspressvorgangs der Füllmasse zerstört wird. Die Dichtungsscheibe kann beispielsweise aus Kunststoff bestehen, was im Hinblick auf den Herstellungsaufwand vorteilhaft sein kann. Zum Beispiel kann die Dichtungsscheibe in einem Spritzgussverfahren hergestellt werden.

Weiterhin ist es zweckmässig, dass der Injektor Mischkörper aufweist, die zur Menge der Füllmasse hin, insbesondere zum Reservoir hin, vorstehen. Solche Mischkörper, die beispielsweise zapfenförmig ausgebildet sein können, können Mischkanäle definieren und/oder begrenzen und somit die Durchmischung der Füllmasse beim Auspressen aus dem Injektor in besonders einfacher Weise verbessern, so dass die Zuverlässigkeit noch weiter gesteigert werden kann. Die Mischkörper können an der Kolbenscheibe und/oder an der Dichtungsscheibe angeordnet sein, soweit die Letztere vorhanden ist. Vorzugsweise weist der Injektor Ausnehmungen zum Aufnehmen zumindest eines Teils der Mischkörper beim Verdrängen des zumindest einen Teils der Menge der Füllmasse mittels der Kolbenscheibe auf

Die Erfindung betrifft auch eine Befestigungsanordnung mit einem erfindungsgemässen Injektor und mit einem Anker mit einem Ankerbolzen, welcher die Durchgangsöffnung des Injektors, insbesondere der Kolbenscheibe durchläuft. In dieser betriebsbereiten Konfiguration ist der Injektor und insbesondere dessen Kolbenscheibe auf den Ankerbolzen des Ankers aufgesteckt. Insbesondere kann der Anker eine am Ankerbolzen angeordnete Ankermutter aufweisen, welche ein Axiallager für den Injektor bildet und den Injektor somit in einer Richtung axial am Ankerbolzen festlegt. Beim Anziehen dieser Ankermutter wird der Injektor an das Anbauteil oder das Substrat gepresst und die Füllmasse hierdurch in den Ringraum gepresst und hierbei vermischt. Die Ankermutter kann unmittelbar aber auch mittelbar an der Kolbenscheibe anliegen.

Die Erfindung betrifft auch ein Gebinde enthaltend einen erfindungsgemässen Injektor und einen Anker. Unter einem Gebinde kann in fachüblicher Weise insbesondere die Gesamtheit aus Verpackung und der verpackten Ware verstanden werden.

Die Erfindung betrifft überdies ein Verfahren zum Installieren eines Ankers mit einem Ankerbolzen, wobei in dem Verfahren der Ankerbolzen des Ankers in einem Loch angeordnet wird und mittels eines erfindungsgemässen Injektors Füllmasse, insbesondere aus dem Injektor, in einen den Ankerbolzen im Loch umgebenden Ringraum eingebracht wird. Beim Einbringen der Füllmasse in den Ringraum kann insbesondere zumindest ein Teil der Mikrokapseln der Härterkomponente, vorzugsweise ein überwiegender Teil der Mikrokapseln, geöffnet werden. Demgemäss wird der Injektor bestimmungsgemäss eingesetzt. Infolge des Öffnens der Mikrokapseln kommt es zu einer Vermischung von Härterkomponente und Harzkomponente, die zuvor durch das Hüllmaterial der Mikrokapseln getrennt waren.

Besonders bevorzugt ist es, dass die Kolbenscheibe des Injektors durch Anziehen einer am Ankerbolzen angeordneten Ankermutter an eine Oberfläche, insbesondere an eine Oberfläche des Substrats, in dem der Ringraum zumindest bereichsweise gebildet ist, oder insbesondere an eine Oberfläche eines Anbauteils, in dem der Ringraum zumindest bereichsweise gebildet ist, angepresst wird und hierbei die Füllmasse mittels der Kolbenscheibe verdrängt und in den Ringraum eingebracht wird.

Regelmässig wird der erfindungsgemässe Injektor zwischen dem Anbauteil und der Ankermutter positioniert werden, grundsätzlich könnte der Injektor aber auch zwischen dem Substrat und dem Anbauteil angeordnet werden.

Merkmale, die im Zusammenhang mit dem erfindungsgemässen Injektor erläutert werden, können auch bei der erfindungsgemässen Befestigungsanordnung, dem erfindungsgemässen Gebinde oder/und dem erfindungsgemässen Verfahren zum Einsatz kommen, so wie auch umgekehrt Merkmale, die im Zusammenhang mit der erfindungsgemässen Befestigungsanordnung, dem erfindungsgemässen Gebinde oder/und dem erfindungsgemässen Verfahren erläutert werden, auch beim erfindungsgemässen Injektor zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine Längsschnittansicht einer erfindungsgemässen Befestigungsanordnung mit einem erfindungsgemässen Injektor und einem Anker, wobei der Ankerbolzen des Ankers in einem Loch angeordnet ist, welches sich durch ein Anbauteil hindurch in ein Substrat erstreckt;
- Figur 2:: eine Ansicht der Kolbenscheibe des Injektors aus Figur 1 von unten;
- Figur 3:: eine vergrösserte Ansicht des Injektors aus Figur 1 in Längsschnittansicht, das heisst gemäss Schnitt A-A der Figur 2;
- Figur 4:: eine schematisch-mikroskopische Ansicht der Füllmasse des Injektors aus Figuren 1 bis 3; und
- Figur 5:: eine Ansicht entsprechend Figur 1 mit zusätzlichen Pfeilen zur Erläuterung des erfindungsgemässen Verfahrens.

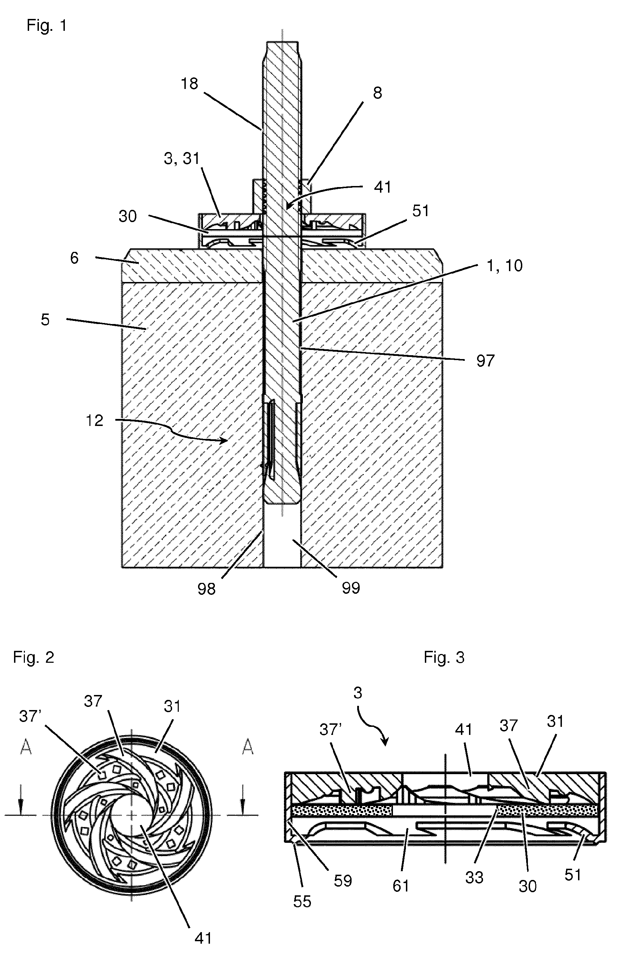

Ein Ausführungsbeispiel einer Befestigungsanordnung ist in den Figuren 1 bis 3 gezeigt. Die Befestigungsanordnung weist einen Anker 1 mit einem Ankerbolzen 10 sowie einen Injektor 3 auf.

Im vorderen Bereich des Ankers 1 weist der Anker 1 eine Verankerungszone 12 auf, in welcher der Ankerbolzen 10 an der Wand 98 eines Lochs 99 verankert werden kann. In Figur 1 ist der Anker 1 beispielhaft als Spreizanker des Bolzentyps dargestellt. Als solcher weist der Anker 1 in der Verankerungszone 12 eine Spreizhülse und einen am Ankerbolzen 10 gebildeten Spreizkonus zum radialen Anpressen der Spreizhülse an die Wand 98 des Lochs 99 bei einer Zuglast im Ankerbolzen 10 auf. Die Ausgestaltung des Ankers 1 als Spreizanker des Bolzentyps ist aber nur beispielhaft zu sehen, und der Anker 1 kann auch andersartig wirkende Verankerungszonen 12 aufweisen. Vorzugsweise ist die Verankerungszone 12 eine mechanische Verankerungszone, also eine Verankerungszone, welche eine zumindest vorwiegend formschlüssige oder reibschlüssige Verankerung bewirkt. Grundsätzlich könnte die Verankerungszone 12 aber auch eine chemische Verankerungszone sein, also eine Verankerungszone, welche eine zumindest vorwiegend stoffschlüssige Verankerung bewirkt.

Im rückwärtigen Bereich des Ankers 1 ist der Ankerbolzen 10 mit einem Aussengewinde 18 versehen. Auf das Aussengewinde ist eine Ankermutter 8 mit einem zum Aussengewinde 18 korrespondierenden Innengewinde aufgeschraubt.

Die Befestigungsanordnung weist ferner einen weiter unten im Detail erläuterten Injektor 3 auf, wobei der Ankerbolzen 10 des Ankers 1 durch den Injektor 3 hindurch verläuft.

Figur 1 zeigt die Befestigungsanordnung bei der Installation des Ankers 1. Demgemäss ist das vordere Ende des Ankerbolzens 10 des Ankers 1 in ein Loch 99 in einem Anbauteil 6 und einem an das Anbauteil 6 angrenzenden Substrat 5, beispielsweise Betonsubstrat, eingeführt. Der den Ankerbolzen 10 umlaufende Injektor 3 befindet sich zwischen der Ankermutter 8 und dem am Substrat 5 anliegenden Anbauteil 6 und somit auch zwischen der Ankermutter 8 und dem Substrat 5. Im Loch 99 ist um den Ankerbolzen 10 herum ein Ringraum 97 gebildet, der sich vom Anbauteil 6 in das Substrat 5 erstreckt.

Der Injektor 3 der Ausführungsform der Figuren 1 bis 3 weist eine metallische Kolbenscheibe 31 mit einer Durchgangsöffnung 41 auf, durch welche der Ankerbolzen 10 hindurch verläuft. Der Kolbenscheibe 31 vorgelagert ist ein Reservoir 33, beispielsweise ein Folienbeutel, welches eine Menge 30 einer Füllmasse enthält. Das Reservoir 33 ist ringförmig ausgebildet und umgibt den Ankerbolzen 10. Dem Reservoir 33 vorgelagert ist eine Dichtungsscheibe 51, welche ebenfalls eine Durchgangsöffnung 61 aufweist, durch welche der Ankerbolzen 10 hindurch verläuft. Das Reservoir 33 befindet sich also zwischen der Kolbenscheibe 31 und der Dichtungsscheibe 51, wobei die Kolbenscheibe 31 der Ankermutter 8 und die Dichtungsscheibe 51 dem Substrat 5 und dem Anbauteil 6 zugewandt ist. Die Dichtungsscheibe 51 weist auf ihrer der Kolbenscheibe 31 abgewandten Aussenseite, das heisst auf ihrer der Menge 30 der Füllmasse abgewandten Aussenseite, eine Dichtlippe 55 auf.

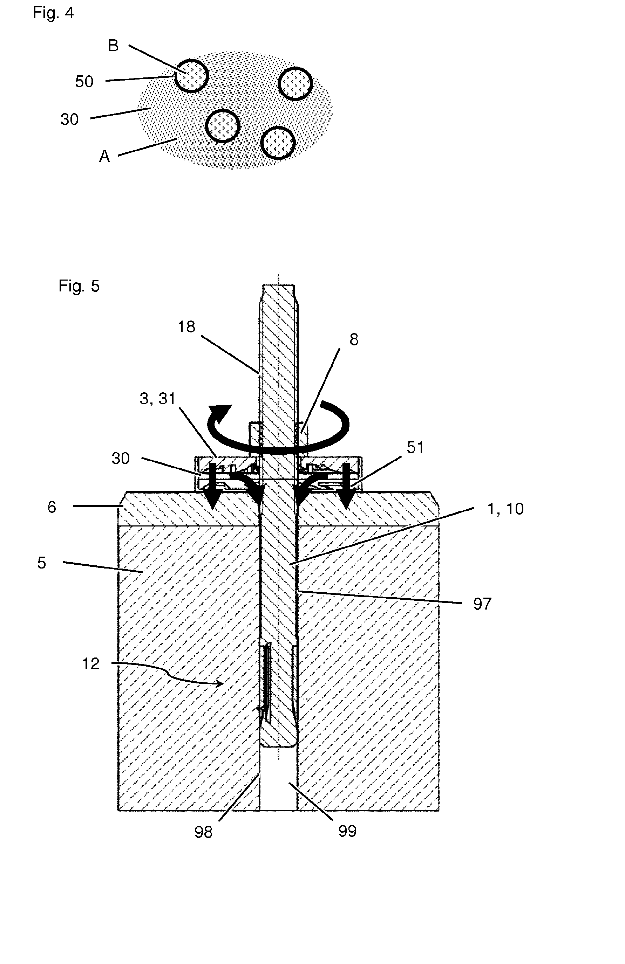

Die Zusammensetzung der Menge 30 der Füllmasse ist schematisch in Figur 4 gezeigt. Wie Figur 4 zeigt, weist die Füllmasse eine Harzkomponente A mit mindestens einem radikalisch härtbaren Harz und eine in Form von Mikrokapseln vorliegende Härterkomponente B mit einem radikalbildenden Härtungsmittel für das radikalisch härtbare Harz der Harzkomponente A auf. Die Härterkomponente B liegt in Form von Mikrokapseln vor, wobei die Mikrokapseln ein Hüllmaterial 50 aufweisen, welches jeweils eine Portion der Härterkomponente einschliesst. In der Füllmasse sind die Mikrokapseln mit der Härterkomponente B in der Harzkomponente A verteilt. Die Harzkomponente A bildet somit eine Matrix für die Mikrokapseln mit der Härterkomponente B.

In Figur 5 ist die Betriebsweise des Injektors 3 in einem erfindungsgemässen Verfahren durch Pfeile angedeutet. Wie Figur 5 zeigt, wird die Ankermutter 8 am Aussengewinde 18 des Ankerbolzens 10 angezogen. Da sich der Ankerbolzen 10 an seiner Verankerungszone 12 im Substrat 5 verankert, nähert sich die Ankermutter 8 hierbei an das Substrat 5 an. Da die Ankermutter 8 querschnittsgrösser als die Durchgangsöffnung 41 in der Kolbenscheibe 31 ist, wird hierbei die Kolbenscheibe 31 von der Ankermutter 8 mitgenommen. Infolgedessen wird der Injektor 3 zwischen der Ankermutter 8 einerseits und dem Substrat 5 und gegebenenfalls dem Anbauteil 6, welche ein Widerlager für den Injektor 3 bilden, andererseits zusammengepresst und die Kolbenscheibe 31 an die Dichtungsscheibe 51 angepresst. Hierbei wird das Reservoir 33 enthaltend die Menge 30 der Füllmasse ausgepresst, und Füllmasse gelangt aus dem Injektor 3 in den Ringraum 97 um den Ankerbolzen 10. Im Rahmen dieses Fliessvorgangs werden die Mikrokapseln mit der Härterkomponente B geöffnet, so dass das hierin enthaltene Härtungsmittel auf das Harz der Harzkomponente A einwirken kann und der Aushärtevorgang der Füllmasse gestartet wird. Daraufhin härtet die Füllmasse im Ringraum 97 vollständig aus und erstarrt dort. Es wird also Füllmasse zwischen der als Kolben wirkenden Kolbenscheibe 31 und dem Anbauteil 6 aus dem Injektor 3 in den Ringraum 97 um den Ankerbolzen 10 verdrängt.

Wie insbesondere die Figuren 2 und 3 zeigen, weist die Kolbenscheibe 31 des Injektors 3 der Ausführungsform der Figuren 1 bis 3 Mischkörper 37 und 37' auf, welche zur Menge 30 der Füllmasse hin, insbesondere zum Reservoir 33 hin, von der Kolbenscheibe 31 vorstehen. Die Mischkörper 37 sind zapfenförmig und die Mischkörper 37' bogenförmig ausgebildet.

Die zur Durchführung des Ankerbolzens 10 vorgesehene Durchgangsöffnung 41 in der Kolbenscheibe 31 kann beispielsweise kreisrund ausgeführt sein. Wie insbesondere Figur 3 zeigt, weist die Durchgangsöffnung 61 der Dichtungsscheibe 51 hingegen eine von einer Kreisform abweichende Querschnittsform auf, so dass an der Durchgangsöffnung 61 der Dichtungsscheibe 51 Mischlappen für die Füllmasse gebildet sind.

Wie insbesondere die Figuren 1 und 3 zeigen, weist der Injektor 3 der Ausführungsform der Figuren 1 bis 3 eine Dichtungshülse 59 auf, in welcher die Kolbenscheibe 31 verschiebbar angeordnet ist, und welche den Injektor 3, insbesondere sein Reservoir 33, in radialer Richtung abdichtet. In der Ausführungsform der Figuren 1 bis 3 ist die vorzugsweise zylindrische Dichtungshülse 59 fest an der Dichtungsscheibe 51 angeordnet und insbesondere einstückig mit der Dichtungsscheibe 51 ausgebildet. Grundsätzlich können die Dichtungshülse 59 und die Dichtungsscheibe 51 aber auch getrennte Teile sein. Für eine besonders gute Dichtwirkung können die Dichtungsscheibe 51 und/oder die Dichtungshülse 59 insbesondere aus einem Kunststoffmaterial bestehen.

## Patentansprüche

1. Injektor (3) zum Verfüllen eines um einen Ankerbolzen (10) gebildeten Ringraums (97), mit einer Kolbenscheibe (31), welche eine Durchgangsöffnung (41) für den Ankerbolzen (10) aufweist, und
einer der Kolbenscheibe (31) vorgelagerten Menge (30) einer Füllmasse, wobei die Kolbenscheibe (31) einen Kolben zum Verdrängen zumindest eines Teils der Menge (30) der Füllmasse in den Ringraum (97) bildet,
wobei die Füllmasse eine Harzkomponente (A), die als härtbaren Bestandteil mindestens ein radikalisch härtbares Harz enthält, und eine in Form von Mikrokapseln vorliegende Härterkomponente (B), die mindestens ein Härtungsmittel für das radikalisch härtbare Harz der Harzkomponente (A) enthält, aufweist.

2. Injektor (3) nach Anspruch 1,
**dadurch gekennzeichnet,**
**dass** das radikalisch härtbare Harz ein (Meth)acrylatharz ist.

3. Injektor (3) nach einem der vorstehenden Ansprüche,
**dadurch gekennzeichnet,**
**dass** das Härtungsmittel bei 20°C flüssig ist.

4. Injektor (3) nach einem der vorstehenden Ansprüche,
**dadurch gekennzeichnet,**
**dass** die Menge (30) der Füllmasse in einem Reservoir (33) angeordnet ist.

5. Injektor (3) nach einem der vorstehenden Ansprüche,
**dadurch gekennzeichnet,**
**dass** er eine Dichtungsscheibe (51) aufweist, wobei die Menge (30) der Füllmasse zumindest teilweise zwischen der Kolbenscheibe (31) und der Dichtungsscheibe (51) angeordnet ist.

6. Injektor (3) nach einem der vorstehenden Ansprüche,
**dadurch gekennzeichnet,**
**dass** er Mischkörper (37) aufweist, die zur Menge (30) der Füllmasse hin vorstehen.

7. Befestigungsanordnung mit einem Injektor (3) nach einem der vorstehenden Ansprüche und mit einem Anker (1) mit einem Ankerbolzen (10), welcher die Durchgangsöffnung (41) der Kolbenscheibe (31) durchläuft.

8. Gebinde enthaltend einen Injektor (3) nach einem der Ansprüche 1 bis 6 und einen Anker (1).

9. Verfahren zum Installieren eines Ankers (1) mit einem Ankerbolzen (10), bei dem der Ankerbolzen (10) des Ankers (1) in einem Loch (99) angeordnet wird und mittels eines Injektors (3) nach einem der Ansprüche 1 bis 6 Füllmasse in einen den Ankerbolzen (10) im Loch (99) umgebenden Ringraum (97) eingebracht wird, wobei zumindest ein Teil der Mikrokapseln der Härterkomponente (B) geöffnet wird.

10. Verfahren nach Anspruch 9,
**dadurch gekennzeichnet,**
**dass** die Kolbenscheibe (31) des Injektors (3) durch Anziehen einer am Ankerbolzen (10) angeordneten Ankermutter (8) an eine Oberfläche angepresst wird und hierbei die Füllmasse mittels der Kolbenscheibe (31) verdrängt und in den Ringraum (97) eingebracht wird.
